# EUROPÄISCHE PATENTANMELDUNG

(11) **EP 4 286 206 A1**
(43) Veröffentlichungstag der Anmeldung: **06.12.2023**
(21) Anmeldenummer: 23170579.9
(22) Anmeldetag: 28.04.2023
(51) Int. Cl.: B60L 3/00, B60L 5/20, B60L 5/36

(54) **STROMABNEHMER FÜR EIN STRASSENFAHRZEUG UND MIT EINEM SOLCHEN AUSGESTATTETES STRASSENFAHRZEUG**

(30) Priorität: 30.05.2022 DE 102022205359
(71) Anmelder: Siemens Mobility GmbH, 81739 München (DE)
(72) Erfinder: Blase, Bastian, 13156 Berlin (DE); Bühs, Florian, 10777 Berlin (DE)
(74) Vertreter: Siemens Patent Attorneys

(57) **Zusammenfassung**

Die Erfindung betrifft einen Stromabnehmer (2) für ein nicht spurgebundenes, elektrisch oder hybridelektrisch angetriebenes Straßenfahrzeug (1) zur Einspeisung von elektrischer Energie aus einer zweipoligen, je Kontaktpol einen Fahrdraht (3, 3') aufweisenden Oberleitungsanlage. Er umfasst ein aufrichtbares, gelenkiges Traggestänge (4), welches zwei voneinander beabstandet angeordnete Kontaktwippen (8) trägt, wobei auf jeder Kontaktwippe (8) jeweils mindestens eine Schleifleiste (9) zur Kontaktierung des dem jeweiligen Kontaktpol zugeordneten Fahrdrahtes (3, 3') federnd gelagert ist. Eine die Kontaktwippen (8) verbindende Wippenbrücke (12) ist derart angeordnet und ausgebildet, dass ein zwischen den Kontaktbrücken (8) verlaufender Fahrdraht (3') durch Auflage auf der Wippenbrücke (12) vor einem Absinken unterhalb der Schleifleisten (9) geschützt ist. Ein Fahrdrahtsensor (22) zur Erfassung eines auf der Wippenbrücke (12) aufliegenden Fahrdrahtes (3') umfasst erfindungsgemäß ein mit einem druckbeaufschlagten Fluid gefülltes Fluidreservoir (23), welches eine mit der Wippenbrücke (12) derart wirkverbundene Ausströmöffnung (24) aufweist, dass eine durch einen aufliegenden Fahrdraht (3') auf die Wippenbrücke (12) wirkende Andruckkraft (F) die Ausströmöffnung (24) öffnet, und einen Druckwächter zur Überwachung des Fluiddruckes im Fluidreservoir (23).

## Beschreibung

Die Erfindung bezieht sich auf einen Stromabnehmer für ein nicht spurgebundenes, elektrisch oder hybridelektrisch angetriebenes Straßenfahrzeug nach dem Oberbegriff des Patentanspruches 1.

Ein derartiger Stromabnehmer ist aus der Offenlegungsschrift DE 10 2018 215 593 A1 bekannt. Dieser Stromabnehmer ist für ein nicht spurgebundenes, elektrisch angetriebenes Fahrzeug zur Einspeisung elektrischer Energie aus einer zweipoligen Oberleitungsanlage mit zwei Fahrdrähten vorgesehen. Die eingespeiste Energie dient vornehmlich der direkten Traktionsversorgung eines Fahrzeugantriebs, kann aber auch einem fahrzeugseitigen Energiespeicher zugeführt werden. Die Fahrdrähte der Oberleitungsanlage sind oberhalb einer von Straßenfahrzeug benutzbaren Fahrbahn, beispielsweise einem Fahrstreifen einer mehrstreifigen Autobahn, gespannt. Der Stromabnehmer umfasst ein gelenkiges Traggestänge, das fahrdrahtseitig zwei nebeneinander angeordnete Kontaktwippen mit Schleifleisten trägt und fahrzeugseitig ein Basisgelenk zur Anlenkung an das Fahrzeug aufweist. Er umfasst ferner einen mit dem Traggestänge gekoppelten Hubantrieb zur Erzeugung eines die Kontaktwippen anhebenden Drehmoments im Basisgelenk. Hierdurch können die Kontaktwippen aus einer unteren Ruheposition in eine obere Kontaktposition angehoben werden, so dass deren Schleifleisten in elektrischen Kontakt zu dem jeweiligen Fahrdraht gebracht werden. Zur Aufrechterhaltung des sich während der Fahrt des Straßenfahrzeugs ausbildenden Schleifkontakts werden die Schleifleisten mittels der Hubeinrichtung mit einer vorgegebenen Andruckkraft gegen die Fahrdrähte gepresst.

Im Vergleich zum Schienenverkehr, wo das Schienenfahrzeug durch das Gleis geführt ist und der Stromabnehmer aufgrund der einpoligen Oberleitungsanlage den Kontakt zu nur einem Fahrdraht halten muss, ist es im Straßenverkehr ungleich schwieriger, ein Straßenfahrzeug so zu führen, dass der Kontakt der Schleifleisten zu den Fahrdrähten stets aufrechterhalten wird. Um eine gewissen Toleranz in den Fahrdrahtlagen und in der lenkbedingten Fahrstreifentreue auszugleichen, weisen die Schleifleisten quer zur Fahrzeuglängsrichtung einen Arbeitsbereich mit einer gewissen Breite auf, die allerdings durch den gegenseitigen Abstand der Fahrdrähte begrenzt ist, um einen Fahrdrahtkurzschluss zu vermeiden. So kann es aufgrund von Seitenwinden, der Straßentopologie, Wankbewegungen des Straßenfahrzeugs oder Unaufmerksamkeit des Fahrzeugführers ebenso wie aufgrund eines Überhol- oder Ausweichmanövers dazu kommen, dass ein Fahrdraht den Arbeitsbereich einer Schleifleiste seitlich verlässt oder sogar über hierfür vorgesehene Ablaufhörner ganz von der Schleifleiste abzurutschen droht. Aufgrund der durch die Hubeinrichtung eingeprägten Andruckkraft besteht in einem solchen Fall das Risiko, dass ein Fahrdraht im Zwischenraum zwischen den Kontaktwippen unter die Schleifleisten gerät und sich verhakt, was schwere Schäden an Stromabnehmer und Oberleitungsanlage zur Folge haben könnte.

Hierfür umfasst der aus DE 10 2018 215 593 A1 bekannte Stromabnehmer eine die Kontaktwippen verbindende und als Eintauchschutz ausgebildete Wippenbrücke, die ein Absinken eines seitlich zwischen den Kontaktwippen verlaufenden Fahrdrahtes unterhalb der Schleifleisten verhindert. Die Wippenbrücke ist an den Kontaktwippen befestigt und derart geformt, dass in Fahrzeuglängsrichtung gesehen Schleifleisten und Wippenbrücke eine lückenlose, glatte Auflagekurve für die Fahrdrähte bilden. Hierdurch kann eine seitliche Fahrdrahtbewegung ohne nennenswerte Querkräfte in die Wippenstrukturen abgeleitet werden. Aus Sicherheitsgründen ist in einem solchen Fall aber trotzdem ein Absenken des Stromabnehmers erforderlich. Hierfür weist die Wippenbrücke dieses bekannten Stromabnehmers zwei elektrisch leitende Brückenbügel auf, die mit einem Fahrdrahtsensor zur Erfassung eines Kontaktes eines Fahrdrahtes mit den Brückenbügeln verbunden sind. Der Fahrdrahtsensor ist als elektrischer Leitfähigkeitssensor ausgebildet, der erfasst, wenn ein Fahrdraht auf beiden Brückenbügeln aufliegt und diese dadurch leitend verbindet. Der Leitfähigkeitssensor kann eine Widerstandsschaltung zwischen den Brückenbügeln aufweisen, die verstimmt wird, wenn ein niederohmiger Fahrdraht beide Brückenbügel berührt. Ein dadurch bedingtes Unterschreiten eines Spannungslevels wird von einer Stromabnehmersteuerung registriert und kann ein Absenken des Traggestänges zum Abdrahten des Stromabnehmers auslösen.

Nachteilig an dem bekannten Stromabnehmer ist, dass bei Berühren der Wippenbrücke mit dem als Pluspol ausgebildeten Fahrdraht die hohe Oberleitungsspannung zu Beschädigungen der Stromabnehmersteuerung und weiteren elektronischen Komponenten führen kann. Zum anderen besteht insbesondere im Winter die Gefahr, dass die elektrische Leitfähigkeit der Fahrdrähte durch Eisbildung an deren Unterseite stark herabgesetzt ist, was die Erkennung einer Berührung der Wippenbrücke durch einen Fahrdraht verzögern oder gar verhindern kann.

Der Erfindung liegt daher die Aufgabe zugrunde einen Stromabnehmer der eingangs genannte Art bereitzustellen, der die geschilderten Nachteile überwindet.

Die Erfindung geht aus von einem Stromabnehmer für ein nicht spurgebundenes, elektrisch oder hybridelektrisch angetriebenes Straßenfahrzeug, beispielsweise für ein schweres Nutzfahrzeug. Der Stromabnehmer ist zur Einspeisung von elektrischer Energie aus einer zweipoligen, je Kontaktpol einen Fahrdraht aufweisenden Oberleitungsanlage vorgesehen. Die als Pluspol und Minuspol ausgebildeten Fahrdrähte sind bevorzugt mittig und parallel verlaufend oberhalb eines dadurch elektrifizierten Fahrstreifens einer Fahrbahn mit an sich bekannten Infrastrukturkomponenten, wie Masten, Seitenhaltern, Tragseilen, Hängern, Spanneinrichtungen, und dergleichen, aufgespannt. Der Stromabnehmer umfasst ein aufrichtbares, gelenkiges Traggestänge, welches zwei voneinander beabstandet angeordnete Kontaktwippen trägt. Das Traggestänge kann pantographenartig ausgebildet sein und einen Unterarm, einen Oberarm, eine Zugstange und eine Führungsstange aufweisen, die durch Gelenke miteinander verbunden sind. Mittels einer Hubvorrichtung des Stromabnehmers, beispielsweise einem Luftbalg, kann das Traggestänge aufgerichtet und dadurch die Kontaktwippen angehoben werden. Jedem der Kontaktpole ist je eine der Kontaktwippen zugeordnet. Auf jeder der Kontaktwippen ist jeweils mindestens eine Schleifleiste zur Kontaktierung des dem jeweiligen Kontaktpol zugeordneten Fahrdrahtes federnd gelagert. Vorzugsweise sind auf einer Kontaktwippe zwei in Fahrzeuglängsrichtung hintereinander und parallel zu einer Fahrzeugquerrichtung angeordnete Schleifleisten gelagert. Es kann aber auch nur eine einzige Schleifleiste je Kontaktwippe gelagert sein. An seitlichen Enden der Schleifleisten können nach unten gebogene Ablaufhörner angeordnet sein. Der Stromabnehmer umfasst auch eine die Kontaktwippen verbindende Wippenbrücke, die derart angeordnet und ausgebildet ist, dass ein zwischen den Kontaktbrücken verlaufender Fahrdraht durch Auflage auf der Wippenbrücke vor einem Absinken unterhalb der Schleifleisten geschützt ist. Dadurch wird verhindert, dass ein in Richtung Fahrzeugmitte abgleitender Fahrdraht unterhalb eines Schleifleistenniveaus gerät und sich dort verhakt. Zur Erfassung eines auf der Wippenbrücke aufliegenden Fahrdrahtes umfasst der Stromabnehmer einen Fahrdrahtsensor.

Erfindungsgemäß umfasst der Fahrdrahtsensor ein mit einem druckbeaufschlagten Fluid gefülltes Fluidreservoir, welches eine mit der Wippenbrücke derart wirkverbundene Ausströmöffnung aufweist, dass eine durch einen aufliegenden Fahrdraht auf die Wippenbrücke wirkende Andruckkraft die Ausströmöffnung öffnet. Der Fahrdrahtsensor umfasst auch einen Druckwächter zur Überwachung des Fluiddruckes im Reservoir. Das Fluidreservoir kann durch ein System von kommunizierenden Fluidleitungen und/oder Fluidkammern gebildet sein, welches an eine Druckquelle zur Druckbeaufschlagung des Fluids angeschlossen ist. Das Fluid ist vorzugsweise elektrisch nicht leitend ausgebildet und kann beispielsweise gereinigte Druckluft sein. Die Druckquelle kann ein Verdichter sein, der gegebenenfalls bereits andere Druckluftverbraucher des Straßenfahrzeugs versorgt. Liegt ein Fahrdraht auf der Wippenbrücke auf, bewirkt die etwa durch die Hubvorrichtung ausgeübte Andruckkraft, mit der nun die Wippenbrücke gegen den Fahrdraht gepresst wird, dass sich die Ausströmöffnung des Fluidreservoirs öffnet und dadurch Fluid aus dem Fluidreservoir entweicht. Mithin sinkt der Fluiddruck im Fluidreservoir, was der Druckwächter beobachtet. Der Druckwächter kann ein Druckmessgerät zur Bestimmung des aktuellen Fluiddruckes und eine Vergleichseinheit zum automatischen Vergleich des gemessenen Fluiddruckes mit einem oder mehreren vorgegebenen Druckwerten umfassen. Der oder die Druckwerte können beispielsweise zu vorab ermittelten Kräftewerten der auf die Wippenbrücke wirkenden Andruckkraft korrespondieren. Der Fahrdrahtsensor kann also die Erfassung beziehungsweise Detektion eines Fahrdrahtes auf der Wippenbrücke über den Druckverlauf des Fluids ermitteln. Durch Einsatz eines pneumatischen Fahrdrahtsensors mit einem elektrisch nicht leitenden Fluid können die eingangs geschilderten Probleme eines elektrischen Fahrdrahtsensors insbesondere hinsichtlich wetterbedingter Fehleranfälligkeit oder elektromagnetischer Verträglichkeit vermieden werden. Durch Entfall eines elektrischen Fahrdrahtsensors kann zudem der Test- und Zulassungsaufwand für einen erfindungsgemäßen Stromabnehmer reduziert werden.

In einer vorteilhaften Ausführungsform des erfindungsgemäßen Stromabnehmers ist der Druckwächter dazu ausgebildet, den Fluiddruck auf Unterschreiten einer voreingestellten Druckschwelle zu überwachen. Um Fehlerfassungen des Fahrdrahtsensors zu vermeiden, überwacht der Druckwächter, ob ein vorbestimmter Schwellwert des Fluiddruckes unterschritten wird. Solange die Ausströmöffnung durch kleine Krafteinwirkungen auf die Wippenbrücke nur geringfügig geöffnet wird, bewirkt die dabei ausgeströmte Fluidmenge nur einen Abfall des Fluiddruckes im Fluidreservoir, der die Druckschwelle nicht unterschreitet. Derartige Öffnungen der Ausströmöffnung gehen einher mit entsprechend geringen Krafteinwirkungen auf die Wippenbrücke, die nicht das Ausmaß einer Fahrdrahtauflage annehmen, sondern beispielsweise von fahrtbedingten Schwingungen herrühren. Eine Öffnung der Ausström-öffnung, die zur Unterschreitung der Druckschwelle führt, bedingt eine Krafteinwirkung auf die Wippenbrücke, die mit typischen Andruckkräften zwischen Fahrdraht und Schleifleisten einhergeht. Im statischen Fall können diese bei 100 N liegen, im dynamischen Fall während der Fahrt zwischen 70 N und 140 N variieren. Beim Andrahten des Stromabnehmers können kurzzeitige sogar Andruckkräfte bis 300 N wirken. Druckabsenkungen des Fluiddruckes, die durch Krafteinwirkungen auf die Wippenbrücke unterhalb der typischerweise durch einen aufliegenden Fahrdraht hervorgerufenen Andruckkräfte hervorgerufen werden, wertet der Fahrdrahtsensor nicht als Detektionsereignis "Erfassung eines auf der Wippenbrücke aufliegenden Fahrdrahtes".

In einer weiteren vorteilhaften Ausführungsform des erfindungsgemäßen Stromabnehmers ist die Ausströmöffnung dazu ausgebildet, für eine voreingestellte Mindestzeitdauer offen zu bleiben, unabhängig davon, ob die zur Öffnung führende Andruckkraft noch auf die Wippenbrücke wirkt. Hierdurch wird vermieden, dass eine sehr kurzzeitige Krafteinwirkung auf die Wippenbrücke im Größenbereich typischer Andruckkräfte eines Fahrdrahtes fälschlicherweise nicht als Detektionsereignis erkannt werden. Eine kurzzeitige Krafteinwirkung könnte bei entsprechender Ausgestaltung der Ausströmöffnung eine ebenso kurzzeitige Öffnung der Ausströmöffnung bewirken mit der Folge, dass nicht genügend Fluid aus dem Fluidreservoir ausströmen kann, um die Druckschwelle zu unterschreiten. Die verzögerte Schließung der Ausströmöffnung lässt soviel Fluid austreten, dass der Fluiddruck unterhalb der Druckschwelle absinken kann - auch wenn die Krafteinwirkung auf die Wippenbrücke nicht so lange anhält. Als Mindestzeitdauer für die verzögerte Schließung der Ausströmöffnung kann beispielsweise die typische Dauer eines Absenkvorgangs des Stromabnehmers eingestellt werden. Nach Ablauf der Mindestzeitdauer schließt die Ausströmöffnung wieder selbsttätig. So kann beispielsweise auch ein kurzes Prellen des Fahrdrahtes auf die Wippenbrücke als Detektionsereignis erkannt werden.

In einer weiteren vorteilhaften Ausführungsform des erfindungsgemäßen Stromabnehmers wird zum Öffnen der Ausströmöffnung durch die Andruckkraft eine von Federmitteln ausgeübte Schließkraft überwunden, wobei beim Schließen der Ausströmöffnung die von den Federmitteln ausgeübte Schließkraft durch eine von Dämpungsmitteln ausgeübte Dämpferkraft reduziert wird. Bei den Federmitteln kann es sich um federelastisches Material handeln, welches das Fluidreservoir im Bereich der Ausströmöffnung umgibt, dessen federelastische Rückstellkräfte bei Verformung als Schließkraft wirken. Dasselbe Material kann auch die Dämpfungsmittel bilden, wenn die Rückverformung des Materials durch die als Schließkraft wirkenden Rückstellkräfte gedämpfte, also gebremst oder verzögert erfolgt. Beispielsweise können elastische Schläuche oder Membrane zum Einsatz kommen. Ebenso sind können die Federmittel durch Federelemente, wie Schraubenfedern, Blattfedern, oder dergleichen, gebildet sein. Dabei kann ein Federelement mit einem Verschlusselement zusammenwirken, welches die Ausströmöffnung bei Überwindung der durch das Federelement ausgeübten Schließkraft freigibt. Die Rückstellung des Verschlusselements zum Verschließen der Ausströmöffnung nach Wegfall der Krafteinwirkung auf die Wippenbrücke kann durch Dämpfungsmittel in Form von passiven Dämpferelementen, wie zum Beispiel die Rückstellbewegung bremsende Gummielemente.

In einer weiteren vorteilhaften Ausführungsform des erfindungsgemäßen Stromabnehmers sind die Federmittel und die Dämpfungsmittel durch ein elastisch dehnbares Zugelement der Wippenbrücke gebildet, in welches sich das Fluidreservoir wenigstens teilweise erstreckt und welches die Ausströmöffnung aufweist. Dabei ist das Zugelement derart in die Wippenbrücke integriert, dass es durch eine Andruckkraft eines aufliegenden Fahrdrahtes unter Öffnung der Ausströmöffnung gedehnt und es sich nach Wegfall der Andruckkraft unter Schließen der Ausströmöffnung wieder zusammenzieht. Bei dieser bevorzugten Ausführungsform kann als Zugelement beispielsweise ein elastisches, mit einem Schlitz als Ausströmöffnung versehenes Schlauchstück zum Einsatz kommen, in das hinein sich das Fluidreservoir erstreckt. Im unbelasteten Zustand hält das Material des Schlauchstückes den Schlitz dicht geschlossen, so dass kein Fluid ausströmen kann. Liegt ein Fahrdraht auf der Wippenbrücke auf, bewirkt die Andruckkraft des Fahrdrahtes eine das Schlauchstück dehnende Zugkraft, wodurch sich der Schlitz öffnet und Fluid ausströmen kann. Nach Wegfall der Krafteinwirkung entfällt auch die Zugkraft auf das Schlauchstück, welches sich selbsttätig und entsprechend der Materialeigenschaften in gedämpfter Weise wieder zusammenzieht. Dabei wird der Schlitz wieder geschlossen.

In einer weiteren vorteilhaften Ausführungsform des erfindungsgemäßen Stromabnehmers ist die Ausströmöffnung durch einen Auslass eines an das Fluidreservoir angeschlossenen, durch die Andruckkraft betätigten Zwei-Wege-Ventils gebildet. Derartige Ventile sind gut verfügbar und können im Bereich der Kontaktwippen, etwa an Aufhängungspunkten der Wippenbrücke, befestigt und an das Fluidreservoir angeschlossen werden. Ein solches Ventil kann beispielsweise als Zylinderventil oder als Membranventil ausgebildet sein. Im Grundzustand des Ventils sperrt es den Durchlass zwischen Fluidreservoir und Ausströmöffnung. Um das Ventil zu öffnen, wird ein Verschlussteil, etwa ein kegeliges oder zylindrisches Teil oder die Membrane, durch Einwirkung der Andruckkraft auf die Wippenbrücke von einer Sperr- in eine Durchlassstellung bewegt, wodurch ein Ausströmen von Fluid aus dem Fluidreservoir durch die Ausströmöffnung freigegeben wird. Durch Kopplung des Verschlussteils mit einer einseitig wirkenden Federelement/ Dämpferelement-Kombination kann das Ventil durch die über die Wippenbrücke eingeleitete Andruckkraft betätigt werden. Diese Variante erlaubt mehr Gestaltungsfreiheit für die Wippenbrücke als jene Variante, in der in die Wippenbrücke ein Zugelement zu integrieren ist.

In einer weiteren vorteilhaften Ausführungsform des erfindungsgemäßen Stromabnehmers weisen die Schleifleisten jeweils ein Schleifstück und einen Schleifstückhalter zur Aufnahme des Schleifstückes auf, wobei sich das Fluidreservoir derart in den Schleifleistenhalter erstreckt, dass es wenigstens teilweise durch das Schleifstück begrenzt ist. Durch diese Erweiterung des Fluidreservoirs lassen sich neben dem Detektionsereignis "Erfassen eines auf der Wippenbrücke aufliegenden Fahrdrahtes" auch detektieren, ob das Schleifstück einen Riss oder einen Ausbruch aufweist. Durch derartige Schäden entstehen an der ausgebrochenen Stelle oder an dem Rissspalt Ausströmöffnungen, durch die Fluid aus dem Fluidreservoir ausströmt, wodurch der Fluiddruck im Fluidreservoir wiederum absinkt. So kann der Fahrdrahtsensor zusätzlich Beschädigungen an den Schleifstücken erfassen.

In einer weiteren vorteilhaften Ausführungsform umfasst der erfindungsgemäße Stromabnehmer ferner eine Steuereinrichtung, die dazu ausgebildet ist, ein Absenken des Traggestänges mit Kontaktwippen auszulösen, wobei die Steuereinrichtung mit dem Fahrdrahtsensor verbunden ist und ein Absenken auslöst, wenn der Fahrdrahtsensor einen auf der Wippenbrücke aufliegenden Fahrdraht erfasst hat. Um trotz Wippenbrücke Folgeschäden nach Auflage eines Fahrdrahtes und/oder nach Bruch eines Schleifstückes zu vermeiden, wird ein Schnellabsenken des Stromabnehmers ausgelöst. Dies kann beispielsweise durch das Eigengewicht des Traggestänges und der Kontaktwippen schwerkraftgetrieben erfolgen, wenn die als Luftbalg ausgebildete Hubvorrichtung deaktiviert und ein Luftweg mit großem Ablassquerschnitt geschaltet wird. Ebenso kann ein Absenken des Stromabnehmers durch einen erfassten Bruch eines Schleifstückes ausgelöst werden.

Die Erfindung betrifft auch ein elektrisch oder hybridelektrisch angetriebenes Straßenfahrzeug mit einem Stromabnehmer nach einem der vorangehenden Ansprüche.

Weitere Vorteile und Eigenschaften der Erfindung ergeben sich aus nachfolgender Beschreibung eines Ausführungsbeispiels anhand der Zeichnungen, in deren
- FIG 1: einen Stromabnehmer nach dem Stand der Technik,
- FIG 2: eine Wippenbrücke nach dem Stand der Technik
- FIG 3: ein erstes Ausführungsbeispiel eines erfindungsgemäßen Fahrdrahtsensors im Normalzustand,
- FIG 4: den Fahrdrahtsensor aus FIG 3 im Detektionszustand,
- FIG 5: ein zweites Ausführungsbeispiel eines erfindungsgemäßen Fahrdrahtsensors und
- FIG 6: ein drittes Ausführungsbeispiel eines erfindungsgemäßen Fahrdrahtsensors

### schematisch veranschaulicht sind.

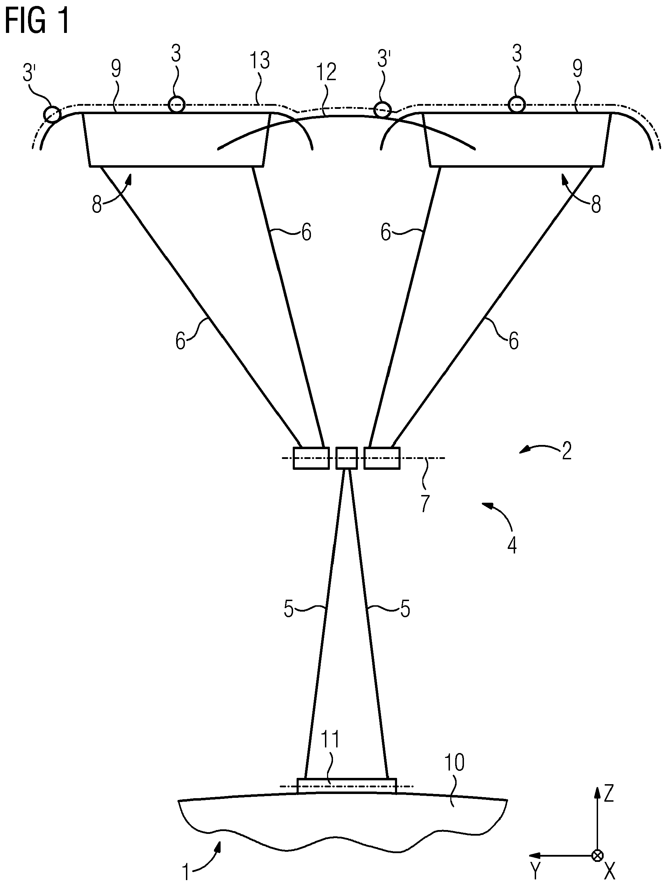

Gemäß FIG 1 umfasst ein elektrisch oder hybridelektrisch angetriebenes Straßenfahrzeug 1, beispielsweise ein Lastkraftwagen oder Bus, einen Stromabnehmer 2, über den auch während der Fahrt elektrische Energie aus einer Oberleitungsanlage einspeisbar ist. Die Oberleitungsanlage ist zweipolig ausgebildet und umfasst über einem Fahrstreifen aufgespannt, je Kontaktpol einen Fahrdraht 3 zur Bereitstellung elektrischer Energie. Der dargestellte Stromabnehmer 2 ist als Halbscherenpantograph ausgebildet und umfasst ein gelenkiges Traggestänge 4 mit einem Unterarm 5 und zwei Oberarmen 6, die jeweils über ein Kniegelenk 7 schwenkbar mit dem Unterarm 5 verbunden sind. Jeder der beiden Oberarme 6 trägt fahrdrahtseitig eine Kontaktwippe 8 mit zwei parallelen Schleifleisten 9, die parallel zu einer Fahrzeugquerrichtung Y und bezüglich einer Fahrzeuglängsrichtung X hintereinander angeordnet sind. Zur Anlenkung des Stromabnehmers 2 an das Straßenfahrzeug 1 ist der Unterarm 5 fahrzeugseitig über ein Basisgelenk 11 mit dem Straßenfahrzeug 1 schwenkbar verbunden und stützt sich auf eine Gestängebasis 10 ab. Mit dem Traggestänge 5 ist eine an sich bekannte und daher nicht näher dargestellte Hubvorrichtung so gekoppelt, dass die Kontaktwippen 8 anhebbar sind. Die Hubvorrichtung kann als Luftfederbalg ausgebildet sein, der bei Druckbeaufschlagung über geeignete mechanische Koppelmittel ein die Kontaktwippen 8 anhebendes Drehmoment im Basisgelenk 11 erzeugt.

In einer unteren Ruheposition der Kontaktwippen 8 ist das Traggestänge 5 des abgedrahteten Stromabnehmers 2 zusammengeklappt, so dass das Straßenfahrzeug 1 die für einen Betrieb außerhalb elektrifizierter Fahrstrecken einzuhaltenden, maximal zulässigen Fahrzeugabmessungen nicht überschreitet und der Stromabnehmer 2 sich in einem elektrisch gesicherten Zustand befindet. Beim Andrahten des Stromabnehmers 2 wird der Unterarm 5 aufgerichtet, wobei nicht dargestellte Zugstangen ein Aufrichten der Oberarme 7 erzwingen, bis die Kontaktwippen 8 ihre in FIG 1 dargestellte obere Kontaktposition erreicht haben, in der ein elektrischer Kontakt zwischen Schleifleisten 9 und Fahrdrähten 3 hergestellt ist. Hierfür ist es erforderlich, dass das Straßenfahrzeug 1 sich hinreichend mittig im elektrifizierten Fahrstreifen befindet, damit die Kontaktstellen der Fahrdrähte 3 innerhalb eines Arbeitsbereichs der Schleifleisten 9 zu liegen kommen.

Der Stromabnehmer 2 umfasst eine Wippenbrücke 12, die als Eintauchschutz für einen seitlich zwischen den benachbarten Kontaktwippen 8 verlaufenden Fahrdraht 3' ausgebildet ist. Ein Fahrdraht 3 kann in die in FIG 1 angedeutete Lage des Fahrdrahtes 3' geraten sowohl beim Andrahten des Stromabnehmers 2 als auch in angedrahtetem Zustand des Stromabnehmers 2, wenn das Fahrzeug 1 und damit der Stromabnehmer 2 seitlich zu stark aus der Fahrstreifenmitte des elektrifizierten Fahrstreifens gelenkt wird. Die Wippenbrücke 12 verhindert ein Aufsteigen der Kontaktwippen 8 aufgrund der vom Hubantrieb vermittelten Hubkraft der Kontaktwippen 8 und damit ein Eindringen des Fahrdrahtes 3' in den Zwischenraum zwischen den Kontaktwippen 8, was sonst zu schweren Beschädigungen an Stromabnehmer 2 und anderen Komponenten der Oberleitungsanlage führen könnte. Die Wippenbrücke 12 ist an den Kontaktwippen 8 befestigt, um ein gegenseitiges Ausrichten der Kontaktwippen 8 bei Andrücken an eines Fahrdrahtes 3' an die Wippenbrücke 12 zu erreichen. Die Wippenbrücke 12 ist derart geformt und angeordnet, dass in Fahrzeuglängsrichtung X gesehen Schleifleisten 9 und Wippenbrücke 12 eine lückenlose, glatte Auflagekurve 13 für die Fahrdrähte 3 bzw. 3' bilden. Hierdurch wird ein weiches Überführen eines Fahrdrahtes 3' zwischen den benachbarten Kontaktwippen 8 erzielt, ohne dass die Bewegungen der Kontaktwippen 8 im Normalbetrieb durch die Wippenbrücke 12 beeinflusst wird.

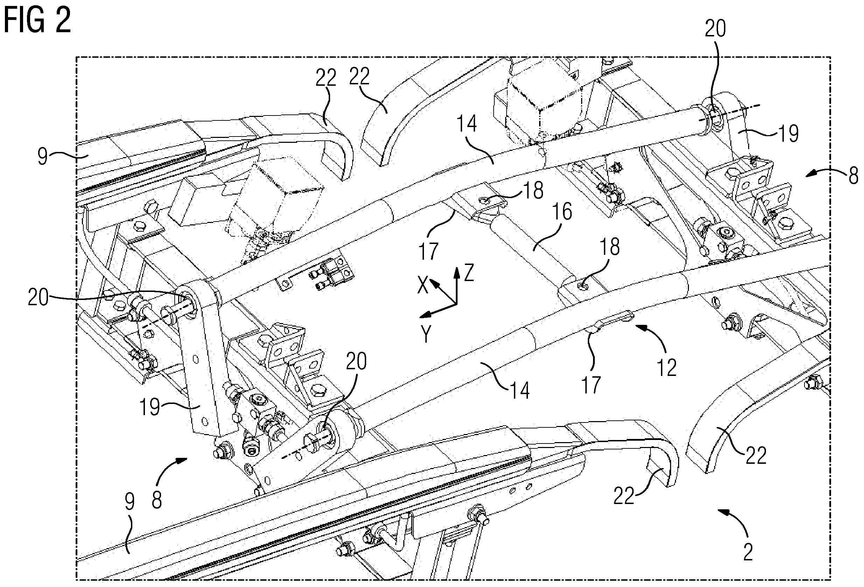

Die Wippenbrücke 12 weist gemäß FIG 2 zwei parallel zur Fahrzeugquerrichtung Y verlaufende und bezüglich der Fahrzeuglängsrichtung X hintereinander angeordnete Brückenbügel 14 auf. Die rohrförmigen Brückenbügel 14 sind gebogen und fallen seitlich nach unten ab. Etwa mittig sind die Brückenbügel 14 durch einen stangenförmigen Längslenker 16 über von unten die Brückenbügel 14 umgreifende Klammerelemente 17 verbunden. Jedes Klammerelement 17 ist mit je einem Ende des Längslenkers 16 über ein Drehgelenk 18 mit vertikaler Drehachse gekoppelt. Die Wippenbrücke 12 weist ferner Stützelemente 19 auf, über die sich die Brückenbügel 14 an den benachbarten Kontaktwippen 8 abstützen. Dabei sind die Endabschnitte 15 der Brückenbügel 14 in Kugelgelenken 20 gelagert, die in den Stützelementen 19 angeordneten sind. Dünnschaftige Abschlüsse der Brückenbügel 14 sind längsverschieblich durch die Kugelgelenke 20 geführt. Durch ihre gelenkigen Verbindungen und Bewegungsfreiheitsgrade erlaubt die Wippenbrücke 12 Relativbewegungen der Kontaktwippen 8 und sorgt für deren gegenseitige Ausrichtung. Jede der beiden Kontaktwippen 8 weist zwei in Fahrzeuglängsrichtung X hintereinander angeordnete Schleifleisten 9 auf, an deren seitlichen Enden nach unten gebogene Ablaufhörner 21 angeordnet sind, von welchen in FIG 2 nur die inneren Ablaufhörner 21 zu sehen sind.

Der Stromabnehmer 2 umfasst ferner einen in FIG 1 und FIG 2 nicht dargestellten Fahrdrahtsensor 21, der detektiert, wenn das Fahrzeug 1 mit angedrahtetem Stromabnehmer 2 soweit aus der Spurmitte abweicht, dass ein Fahrdraht 3 den Arbeitsbereich einer Schleifleiste 9 verlassen hat und auf den Brückenbügeln 14 der Wippenbrücke 12 aufliegt.

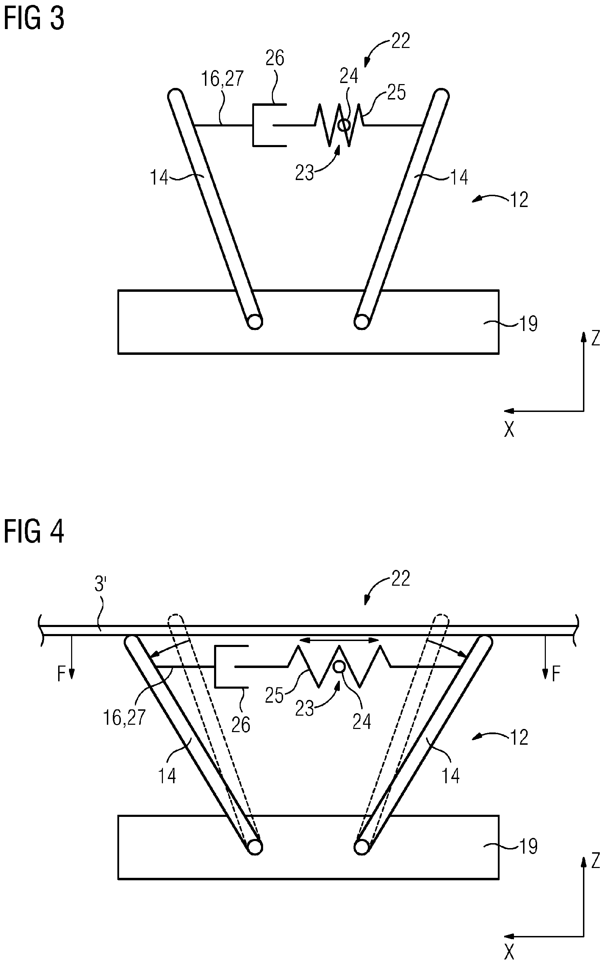

Zur Erfassung eines auf der Wippenbrücke 12 aufliegenden Fahrdrahtes 3' umfasst der Stromabnehmer 2 einen in FIG 1 und FIG 2 nicht dargestellten Fahrdrahtsensor 22, der gemäß FIG 3 bis FIG 6 ein mit einem druckbeaufschlagten Fluid gefülltes Fluidreservoir 23 aufweist, welches eine mit der Wippenbrücke 12 derart wirkverbundene Ausströmöffnung 24 aufweist, dass eine durch einen aufliegenden Fahrdraht 3' auf die Wippenbrücke 12 wirkende Andruckkraft F die Ausströmöffnung 24 öffnet. Unter Ausströmöffnung 24 wird hier eine Leckage des Fluidreservoirs 23 verstanden, deren Durchflussquerschnitt durch Bewegung des die Öffnung randseitig umgebenden Materials oder durch Bewegung von gesonderten Elementen, durch welche die Öffnung zunehmend abdeckbar ist, veränderbar ist. Der Fahrdrahtsensor 22 umfasst auch einen nicht dargestellten Druckwächter zur Überwachung des Fluiddruckes im Fluidreservoir 23. Das Fluidreservoir 23 kann durch ein System von kommunizierenden Fluidleitungen und/oder Fluidkammern gebildet sein, welches an eine Druckquelle zur Druckbeaufschlagung des Fluids angeschlossen ist. Das Fluid ist vorzugsweise gereinigte Druckluft sein.

Liegt ein Fahrdraht 3' auf der Wippenbrücke 12 auf, bewirkt die etwa durch die Hubvorrichtung ausgeübte Andruckkraft F, mit der nun die Wippenbrücke 12 gegen den Fahrdraht 3' gepresst wird, dass sich die Ausströmöffnung 24 des Fluidreservoirs 23 öffnet und dadurch Fluid aus dem Fluidreservoir 23 entweicht. Mithin sinkt der Fluiddruck im Fluidreservoir 23, was der Druckwächter beobachtet.

Der Druckwächter kann ein Druckmessgerät zur Bestimmung des aktuellen Fluiddruckes und eine Vergleichseinheit zum automatischen Vergleich des gemessenen Fluiddruckes mit einem oder mehreren vorgegebenen Druckwerten umfassen. Der oder die Druckwerte können beispielsweise zu vorab ermittelten Kräftewerten der auf die Wippenbrücke 12 wirkenden Andruckkraft F korrespondieren. Der Fahrdrahtsensor 22 kann also die Erfassung beziehungsweise Detektion eines Fahrdrahtes 3' auf der Wippenbrücke 12 über den Druckverlauf des Fluids ermitteln. Der Druckwächter kann den Fluiddruck auf Unterschreiten einer voreingestellten Druckschwelle überwachen, um Fehlerfassungen des Fahrdrahtsensors 22 zu vermeiden. Solange die Ausströmöffnung 24 durch kleine Krafteinwirkungen auf die Wippenbrücke 12 nur geringfügig geöffnet wird, bewirkt die dabei ausgeströmte Fluidmenge nur einen Abfall des Fluiddruckes im Fluidreservoir 23, der die Druckschwelle nicht unterschreitet. Derartige Öffnungen der Ausströmöffnung 24 gehen einher mit entsprechend geringen Krafteinwirkungen auf die Wippenbrücke 12, die nicht das Ausmaß einer Fahrdrahtauflage annehmen, sondern beispielsweise von fahrtbedingten Schwingungen herrühren. Eine Öffnung der Ausströmöffnung 24, die zur Unterschreitung der Druckschwelle führt, bedingt eine Krafteinwirkung auf die Wippenbrücke 12, die mit typischen Andrucckräften F zwischen Fahrdraht 3' und Schleifleisten 9 einhergeht. Im statischen Fall können diese bei 100 N liegen, im dynamischen Fall während der Fahrt zwischen 70 N und 140 N variieren. Beim Andrahten des Stromabnehmers 2 können kurzzeitige sogar Andruckkräfte F bis 300 N wirken. Druckabsenkungen des Fluid-druckes, die durch Krafteinwirkungen auf die Wippenbrücke 12 unterhalb der typischerweise durch einen aufliegenden Fahrdraht 3' hervorgerufenen Andruckkräfte F verursacht werden, wertet der Fahrdrahtsensor 22 nicht als Detektionsereignis "Erfassung eines auf der Wippenbrücke 12 aufliegenden Fahrdrahtes 3'".

Die Ausströmöffnung 24 ist dazu ausgebildet, für eine voreingestellte Mindestzeitdauer offen zu bleiben, unabhängig davon, ob die zur Öffnung führende Andruckkraft F noch auf die Wippenbrücke 12 wirkt. Hierdurch wird vermieden, dass eine sehr kurzzeitige Krafteinwirkung auf die Wippenbrücke 12 im Größenbereich typischer Andruckkräfte F eines Fahrdrahtes 3' fälschlicherweise nicht als Detektionsereignis erkannt werden. Eine kurzzeitige Krafteinwirkung könnte bei entsprechender Ausgestaltung der Ausströmöffnung 24 eine ebenso kurzzeitige Öffnung der Ausströmöffnung 24 bewirken mit der Folge, dass nicht genügend Fluid aus dem Fluidreservoir 23 ausströmen kann, um die Druckschwelle zu unterschreiten. Die verzögerte Schließung der Ausströmöffnung 24 lässt so viel Fluid austreten, dass der Fluiddruck unterhalb der Druckschwelle absinken kann - auch wenn die Krafteinwirkung auf die Wippenbrücke 12 nicht so lange anhält. Als Mindestzeitdauer für die verzögerte Schließung der Ausströmöffnung 24 kann beispielsweise die typische Dauer eines Absenkvorgangs des Stromabnehmers 2 eingestellt werden. Nach Ablauf der Mindestzeitdauer schließt die Ausströmöffnung 24 wieder selbsttätig. So kann beispielsweise auch ein kurzes Prellen des Fahrdrahtes 3' auf die Wippenbrücke 12 als Detektionsereignis erkannt werden.

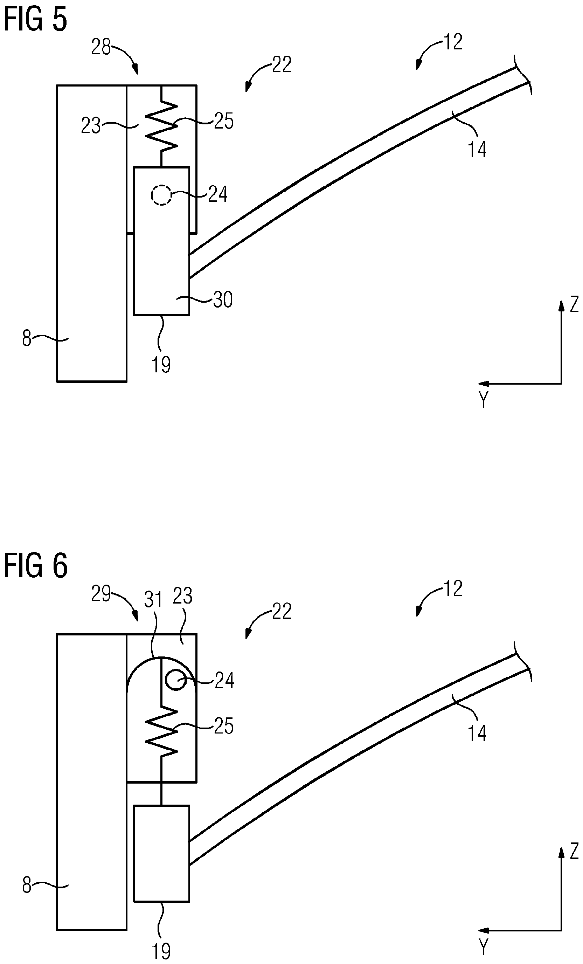

Zum Öffnen der Ausströmöffnung 24 durch die Andruckkraft F wird eine von Federmitteln 25 ausgeübte Schließkraft überwunden, wobei beim Schließen der Ausströmöffnung 24 die von den Federmitteln 25 ausgeübte Schließkraft durch eine von Dämpungsmitteln 26 ausgeübte Dämpferkraft reduziert wird. Bei den Federmitteln 25 kann es sich gemäß FIG 3 und FIG 4 um federelastisches Material handeln, welches das Fluidreservoir 23 im Bereich der Ausströmöffnung 24 umgibt, dessen federelastische Rückstellkräfte bei Verformung als Schließkraft wirken. Dasselbe Material kann auch die Dämpfungsmittel 26 bilden, wenn die Rückverformung des Materials durch die als Schließkraft wirkenden Rückstellkräfte gedämpfte, also gebremst oder verzögert erfolgt. Beispielsweise können elastische Schläuche (vgl. FIG 3 und FIG 4) oder Membrane (vgl. FIG 6) zum Einsatz kommen. Ebenso können die Federmittel 25 durch Federelemente (vgl. FIG 5), wie Schraubenfedern, Blattfedern, oder dergleichen, gebildet sein. Dabei kann ein Federelement 25 mit einem Verschlusselement zusammenwirken, welches die Ausströmöffnung 24 bei Überwindung der durch das Federelement 25 ausgeübten Schließkraft freigibt. Die Rückstellung des Verschlusselements zum Verschließen der Ausströmöffnung 24 nach Wegfall der Krafteinwirkung auf die Wippenbrücke 12 kann durch Dämpfungsmittel 26 in Form von passiven Dämpferelementen (vgl. FIG 3 und FIG 4), wie zum Beispiel die Rückstellbewegung bremsende Gummielemente.

Im Ausführungsbeispiel gemäß FIG 3 und FIG 4 sind die Federmittel 25 und die Dämpfungsmittel 26 durch ein elastisch dehnbares Zugelement 27 der Wippenbrücke 12 gebildet, in welches sich das Fluidreservoir 23 wenigstens teilweise erstreckt und welches die Ausströmöffnung 24 aufweist. Dabei ist das Zugelement 27 derart in die Wippenbrücke 12 integriert, dass es durch eine Andruckkraft F eines aufliegenden Fahrdrahtes 3' unter Öffnung der Ausströmöffnung 24 gedehnt und es sich nach Wegfall der Andruckkraft F unter Schließen der Ausströmöffnung 24 wieder zusammenzieht. Das Zugelement 27 kann in den sich zwischen den Brückenbügeln 14 erstreckenden Längslenker 16 integriert sein oder diesen ersetzen. Als Zugelement 27 kann ein elastisches, mit einem Schlitz als Ausströmöffnung 24 versehenes Schlauchstück zum Einsatz kommen, in das hinein sich das Fluidreservoir 23 (nicht explizit dargestellt) erstreckt. Im unbelasteten Zustand gemäß FIG 3 hält das Material des Schlauchstückes den Schlitz dicht geschlossen, so dass kein Fluid ausströmen kann. Liegt gemäß FIG 4 ein Fahrdraht 3' auf der Wippenbrücke 12 auf, bewirkt die Andruckkraft F des Fahrdrahtes 3', dass sich die beiden Brückenbügel 14 voneinander wegklappen, wodurch sich das Schlauchstück gedehnt wird. Dadurch öffnet sich der Schlitz und Fluid kann ausströmen. Nach Wegfall der Krafteinwirkung entfällt auch die Zugkraft auf das Schlauchstück, welches sich selbsttätig und entsprechend der Materialeigenschaften in gedämpfter Weise wieder zusammenzieht. Dabei wird der Schlitz wieder geschlossen.

Gemäß FIG 5 und FIG 6 ist die Ausströmöffnung 24 durch einen Auslass eines an das Fluidreservoir 23 angeschlossenen, durch die Andruckkraft F betätigten Zwei-Wege-Ventils 28 bzw. 29 gebildet. Derartige Ventile 28 bzw. 29 sind gut verfügbar und können im Bereich der Kontaktwippen 8, etwa an Aufhängungspunkten der Wippenbrücke 12, befestigt und an das Fluidreservoir 23 angeschlossen werden. Es kann beispielsweise gemäß FIG 5 als Zylinderventil 28 oder gemäß FIG 6 als Membranventil 29 ausgebildet sein. Im Grundzustand des Ventils 28 bzw. 29 sperrt es den Durchlass zwischen Fluidreservoir 23 und Ausströmöffnung 24. Um das Ventil 28 bzw. 29 zu öffnen, wird ein Verschlussteil, etwa ein kegeliges oder zylindrisches Teil 30 oder die Membrane 31, durch Einwirkung der Andrucckraft F auf die Wippenbrücke 12 von einer Sperr- in eine Durchlassstellung bewegt, wodurch ein Ausströmen von Fluid aus dem Fluidreservoir 23 durch die Ausströmöffnung 24 freigegeben wird. Durch Kopplung des Verschlussteils 30 bzw. 31 mit einer einseitig wirkenden Kombination eines Federelements 25 mit einem Dämpferelement 26 (nicht explizit dargestellt) kann das Ventil 28 bzw. 29 durch die über die Wippenbrücke 12 eingeleitete Andruckkraft F betätigt werden.

Der Fahrdrahtsensor 22 kann mit einem nicht dargestellten Schleifstückbruchsensor kombiniert werden. Die Schleifleisten 9 weisen jeweils ein Schleifstück und einen Schleifstückhalter zur Aufnahme des Schleifstückes auf, das Risse oder Ausbruche erleiden kann und dann nicht mehr weiterbetrieben werden darf. Zur Erweiterung als Schleifstückbruchsensor wird das Fluidreservoir 23 derart in den Schleifleistenhalter hinein erstreckt, dass es wenigstens teilweise durch das Schleifstück begrenzt ist. Durch den genannten Schäden entstehen an der ausgebrochenen Stelle oder am Rissspalt weitere Ausströmöffnungen, durch die Fluid aus dem Fluidreservoir 23 ausströmt, wodurch der Fluiddruck im Fluidreservoir 23 wiederum absinkt. So kann der Fahrdrahtsensor 22 zusätzlich Beschädigungen an den Schleifstücken der Schleifleisten 9 erfassen.

In jedem Fall ist eine nicht dargestellte Steuereinrichtung dazu ausgebildet, ein Absenken des Traggestänges 4 mit Kontaktwippen 8 auszulösen, wobei die Steuereinrichtung mit dem Fahrdrahtsensor 22 verbunden ist und ein Absenken auslöst, wenn der Fahrdrahtsensor 22 einen auf der Wippenbrücke 12 aufliegenden Fahrdraht 3' erfasst hat. Um trotz Wippenbrücke 12 Folgeschäden nach Auflage eines Fahrdrahtes 3' und/oder nach Bruch eines Schleifstückes zu vermeiden, wird ein Schnellabsenken des Stromabnehmers 2 ausgelöst. Dies kann beispielsweise durch das Eigengewicht des Traggestänges 4 und der Kontaktwippen 8 schwerkraftgetrieben erfolgen, wenn die als Luftbalg ausgebildete Hubvorrichtung deaktiviert und ein Luftweg mit großem Ablassquerschnitt freigeschaltet wird. Ebenso kann ein Absenken des Stromabnehmers 2 durch einen erfassten Bruch eines Schleifstückes ausgelöst werden.

## Patentansprüche

1. Stromabnehmer (2) für ein nicht spurgebundenes, elektrisch oder hybridelektrisch angetriebenes Straßenfahrzeug (1) zur Einspeisung von elektrischer Energie aus einer zweipoligen, je Kontaktpol einen Fahrdraht (3, 3') aufweisenden Oberleitungsanlage, umfassend
- ein aufrichtbares, gelenkiges Traggestänge (4), welches zwei voneinander beabstandet angeordnete Kontaktwippen (8) trägt, wobei auf jeder Kontaktwippe (8) jeweils mindestens eine Schleifleiste (9) zur Kontaktierung des dem jeweiligen Kontaktpol zugeordneten Fahrdrahtes (3, 3') federnd gelagert ist,
- eine die Kontaktwippen (8) verbindende Wippenbrücke (12), die derart angeordnet und ausgebildet ist, dass ein zwischen den Kontaktbrücken (8) verlaufender Fahrdraht (3') durch Auflage auf der Wippenbrücke (12) vor einem Absinken unterhalb der Schleifleisten (9) geschützt ist, und
- einen Fahrdrahtsensor (22) zur Erfassung eines auf der Wippenbrücke (12) aufliegenden Fahrdrahtes (3'),
**dadurch gekennzeichnet, dass** der Fahrdrahtsensor (22) umfasst
- ein mit einem druckbeaufschlagten, elektrisch nicht leitfähigen Fluid gefülltes Fluidreservoir (23), welches eine mit der Wippenbrücke (12) derart wirkverbundene Ausströmöffnung (24) aufweist, dass eine durch einen aufliegenden Fahrdraht (3') auf die Wippenbrücke (12) wirkende Andruckkraft (F) die Ausströmöffnung (24) öffnet, und
- einen Druckwächter zur Überwachung des Fluiddruckes im Fluidreservoir (23).

2. Stromabnehmer (2) nach Anspruch 1,
- wobei der Druckwächter dazu ausgebildet ist, den Fluiddruck auf Unterschreiten einer voreingestellten Druckschwelle zu überwachen.

3. Stromabnehmer (2) nach einem der vorangehenden Ansprüche,
- wobei die Ausströmöffnung (24) dazu ausgebildet ist, für eine voreingestellte Mindestzeitdauer offen zu bleiben, unabhängig davon, ob die zur Öffnung führende Andruckkraft (F) noch auf die Wippenbrücke (12) wirkt.

4. Stromabnehmer (2) nach Anspruch 3,
- wobei zum Öffnen der Ausströmöffnung (24) durch die Andruckkraft (F) eine von Federmitteln (25) ausgeübte Schließkraft überwunden wird, und
- wobei beim Schließen der Ausströmöffnung (24) die von den Federmitteln (25) ausgeübte Schließkraft durch eine von Dämpungsmitteln (26) ausgeübte Dämpferkraft reduziert wird.

5. Stromabnehmer (2) nach Anspruch 4,
- wobei die Federmittel (25) und die Dämpfungsmittel (26) durch ein elastisch dehnbares Zugelement (27) der Wippenbrücke (12) gebildet sind, in welches sich das Fluidreservoir (23) wenigstens teilweise erstreckt und welches die Ausströmöffnung (24) aufweist,
- wobei das Zugelement (27) derart in die Wippenbrücke (12) integriert ist, dass es durch eine Andruckkraft (F) eines aufliegenden Fahrdrahtes (3') unter Öffnung der Ausströmöffnung (24) gedehnt und es sich nach Wegfall der Andruckkraft (F) unter Schließen der Ausströmöffnung (24) wieder zusammenzieht.

6. Stromabnehmer (2) nach Anspruch 4,
- wobei die Ausströmöffnung (24) durch einen Auslass eines an das Fluidreservoir (23) angeschlossenen, durch die Andrucckraft (F) betätigten Zwei-Wege-Ventils (28, 29) gebildet ist.

7. Stromabnehmer (2) nach einem der vorangehenden Ansprüche,
- wobei die Schleifleisten (9) jeweils ein Schleifstück und einen Schleifstückhalter zur Aufnahme des Schleifstückes aufweist,
- wobei sich das Fluidreservoir (23) derart in den Schleifleistenhalter erstreckt, dass es wenigstens teilweise durch das Schleifstück begrenzt ist.

8. Stromabnehmer (2) nach einem der vorangehenden Ansprüche,
- ferner umfassend eine Steuereinrichtung, die dazu ausgebildet ist, ein Absenken des Traggestänges (4) mit Kontaktwippen (8) auszulösen,
- wobei die Steuereinrichtung mit dem Fahrdrahtsensor (22) verbunden ist und ein Absenken auslöst, wenn der Fahrdrahtsensor (22) einen auf der Wippenbrücke (12) aufliegenden Fahrdraht (3') erfasst hat.

9. Elektrisch oder hybridelektrisch angetriebenes Straßenfahrzeug (1) mit einem Stromabnehmer (2) nach einem der vorangehenden Ansprüche.
